# EUROPEAN PATENT APPLICATION

(11) **EP 3 288 300 A1**
(43) Date of publication of application: **28.02.2018**
(21) Application number: 16306078.3
(22) Date of filing: 24.08.2016
(51) Int. Cl.: H04W 8/20

(54) **METHOD FOR DOWNLOADING FILES FROM AN OTA PLATFORM OVER-THE-AIR TO SECURE ELEMENTS AND CORRESPONDING OTA PLATFORM**

(71) Applicant: GEMALTO SA, 92190 Meudon (FR)
(72) Inventor: DING, Meijuan, 13881 Gemenos cedex (FR); GRAVALLON, Sébastien, 13881 Gemenos cedex (FR)

(57) **Abstract**

The application relation to the download of files from an OTA platform over-the-air to secure elements, such as SIM cards, UICCs, or embedded UICCs.
Such a download is typically realized by OTA over SMS systems or OTA over HTTP. However, these solutions have some drawbacks, such as download of all files of a roaming campaign even though not every file needs to be updated. This problem is solved in that the OTA platform keeps track for every file which version is installed in the UICC and sends only those files for which a newer version has been released.
Therefore, the application proposes a method for downloading files from an OTA platform over-the-air to secure elements cooperating with terminals, these files comprising roaming information allowing the secure elements to connect to networks different from their Home Public Land Mobile Networks, the method consisting in, for each secure element:
- Polling the OTA platform by the secure element (3);
- Checking if a new release of at least one file for which the owner of the secure element has contracted a subscription is available (4);
- If this check is positive, sending only the new release to the secure element and storing this new release in the secure element (5).

## Description

The present invention is related to telecommunications and concerns a method for downloading files from an OTA platform over-the-air to secure elements.

In a cellular telecommunication system like for example GSM, UMTS or LTE, a subscriber is able to communicate with a base station of an operator with his terminal. The terminal is for example a mobile terminal (a mobile phone, a smartphone, a PDA,...) cooperating with a secure element (a SIM card, a UICC or an embedded UICC also called eUICC).

Steering of roaming, or "preferred roaming", is the process by which a mobile operator decides which partner their subscribers will use whilst roaming. There are many mobile or cellular network operators, or providers, in the world, often more than one in a single country. These network operators include, but are not limited to, operators who provide mobility services using GSM, GPRS, 3G, LTE, CDMA, TDMA, and WCDMA technology. These network operators provide voice and data services to their own subscribers and to subscribers from other networks. When the network operator provides service to a subscriber from a foreign country, it is referred to as "international roaming". When the network operator provides service to a subscriber from another network in the same country, it is referred to as "national roaming".

When the subscriber is registered in the network with which it has a direct billing relationship, the serving network is often referred to as the Home Public Land Mobile Network or HPLMN. If the subscriber is in a network with which it does not have a direct billing relationship, the serving network is referred to as the Visited Public Land Mobile Network or VPLMN, and the subscriber is referred to as an in-roamer by the VPLMN. The same subscriber is referred to as an out-roamer by the HPLMN. In such a case, the in-roamers are treated as temporary subscribers from a service availability perspective, while the billing for usage incurred by them is through inter-carrier settlements via the home network of the subscriber.

Various network operators have partnership agreements with each other that include more favorable roaming charges than non-partners receive. Partner networks are "preferred" networks for the network operator's subscriber to register with when roaming. Non-partner networks are "non-preferred" networks to the subscriber. Network operators can maximize their margins and the roamers can get more attractive roaming rates and services if roamers roam on their home mobile operator's preferred partner networks.

Over the last few years, the revenues to network operators from home subscribers have consistently declined due to increased competition and resulting pricing pressures. On the other hand, revenues from roamers have consistently grown in the same period due to increased mobile penetration in local markets and an increase in travel. Moreover, roaming revenues are high-margin revenues that typically comprise between 8-25% of the total network operator revenues. Hence, protecting the existing roaming revenues and growing them further has become an important priority for the network operators worldwide.

In order to steer the subscriber's secure element to a preferred network, an operator managing this secure element can download a list of preferred networks in dedicated files of the secure element. These files are for example the following files:
- EPRL (Extended Preferred Roaming List)
- MLPL (MMSS Location Associated Priority List)
- MSPL (MMSS System Priority List)
- OPLMN (Operator Controlled PLMN)
- PLMN (Public Land Mobile Network)
- HPLMN (Home PLMN)
- EHPLMN (Equivalent Home PLMN)

The download of the files is typically realized over OTA (Over The Air): Once connected to an OTA platform or server, these files can be updated in the secure element (that will be called hereafter alternatively UICC). This update is realized through SMS or HTTP. This update consist in sending to UICCs new template releases (when version N+1 is available).

In OTA over SMS system, each time when there is a new service available for UICCs, the operator launches a massive campaign to push new service download (template releases) via SMSs to the eligible UICCs. In such scenario, OTA system acts in a proactive mode to deliver new service to UICCs, and the UICCs act in a passive way.

In OTA over HTTP, OTA doesn't push service download to UICC anymore. Instead, it stores a list of service template releases to be downloaded by UICCs and waits for the UICCs to poll from the OTA via HTTP system, then downloads the service template releases to UICCs via HTTP channels which are initiated by UICCs. In such scenario, OTA over HTTP system acts in passive mode, and UICC acts in proactive mode. Using campaign service merely just injects a batch of service templates into OTA server, and wait for UICCs to initiate polling HTTP request to download the service template releases.

These solutions present the following drawbacks:
1) High volume repetitive campaign injection. In some platforms, each 2 months for example, there will be over 1 billion campaign injection traffic. After each 2 months, new campaign will be taken place to inject another 1 billion data just due to some new service template release. For other operators, the cycle is even shorter (15 days / 1 month).
   That is to say, each time when there is a service template release (specifically for updating roaming lists), a new campaign has to be scheduled to specify UICCs which need to download the new template release in their next polling.
   In some extreme case, before finishing one campaign injection for one template release, another release is available for the same service template.
2) The time between the service injection via campaign service and the UICC's polling initiation is unpredictable. It results high pending service volume in OTA service in time. For a given operator, each month there can be 50M∼100M such pending service records stuck in OTA database without UICC poll. In time, the OTA server's pending service table can grow extremely big (i.e. one billion data).
3) Heavy operational workload to launch and maintain those massive campaigns.
4) Service delta was not properly managed between campaign cycles. A typical roaming campaign is made of following templates: EPRL, MLPL, MSPL, OPLMN, PLMN, HPLMN, and EHPLMN. However not every files needs to be updated at the same time but the current campaign design leads to bundle them together. With the current campaign architecture, if only two files are changing, a new campaign with all these seven files will have to be scheduled.
5) On-the-fly complicated eligibility check in campaign, designed in current OTA over HTTP campaign system, is not satisfying performance demand in heavily loaded OTA system. In loT environment (capacity reaches more than one billion) or in consumer environment for Tiers 1 operator, the huge number of polling per seconds (e.g. 500-1000 polling per seconds) leads to the needs to optimize the real time eligibility check.
   Current design leads to limit the number of campaign in parallel, because the eligibility check is resource consuming (CPU, database access) when it is doing in real time when the UICC poll. The eligibility criteria or rules (e.g. if the subscriber has a specific plan such post paid + LTE + golden subscriber option rules) may be complex to define or complex to maintain on the OTA side.
   Thus for each campaign defined on the OTA server, a systematic eligibility check has to be performed during each polling. For example, if numerous campaigns are configured, the OTA server will go campaign by campaign and check if the UICC is eligible for the campaign, based on criteria or rules. The performance of OTA system will be dragged down dramatically by campaign system.
6) OTA campaigns request a huge workload of OTA servers since many UICCs have to be updated in a short timeframe. For roaming purposes, MNOs negotiate frequently agreements (can vary from every 2/3 weeks to every 4/5 weeks according to the operator for the USA) and the UICCs of a MNO have to be updated at least within this timeframe.
   The increase of the workload of the OTA server increases with the number of subscribers and leads to a spacing of the OTA campaigns, which is difficultly acceptable for the MNOs.
7) These campaigns consist to send several files to each UICC that connects to the OTA server. During this polling event, specific files are sent to each UICC according to some specific criteria known by the OTA server, for example the secure element electric profile name or secure element capability. An electric profile corresponds to technical specifications of a secure element. This profile is discussed between the MNO and the secure element manufacturer and it results in a list of files, keys and applications that have to be present in the secure element. These files, keys and applications are loaded in the secure element during the personalization stage, at the level of the secure element manufacturer and the secure elements are then shipped to the MNO. The MNO then sells the secure elements to his customers who choose different subscriptions. An electric profile does therefore not correspond to a subscription. The electric profile is a set of description for a batch of UICCs generated from factory that shares the same physical and bootstrap features.

In some cases, a MNO can choose to have on his secure elements a large number of files, for example files corresponding to a CDMA network and files corresponding to UMTS networks. When a secure element containing these files will poll the OTA server, the corresponding files will be updated, even if his subscription does only correspond to a UMTS network: The updating of the CDMA files is therefore useless.

Moreover, when a secure element is sold by the MNO, he does not know where it will be used (in a M2M device, in a mobile terminal, in a NFC device,...). In order not to have to keep a stock of different types of secure elements having different electric profiles, the MNO has therefore to ask for the most complete electric profile to the secure element manufacturer. This leads to a huge amount of files to be updated later when the secure elements connect to the OTA platform. That makes the current campaign design based on technical criteria doesn't fit in to how MNO arrange their campaigns in real word.

The present invention proposes a solution to these problems.

The invention proposes a method for downloading files from an OTA platform over-the-air to secure elements cooperating with terminals, these files comprising roaming information allowing the secure elements to connect to networks different from their Home Public Land Mobile Networks, the method consisting in, for each secure element:
- Polling the OTA platform by the secure element;
- Checking by said OTA platform if a new release of at least one file for which the owner of the secure element has contracted a subscription is available;
- If this check is positive, sending by said OTA platform only the new release to the secure element and storing this new release in the secure element.

Preferably, the at least one file is one of the following files:
- EPRL (Extended Preferred Roaming List)
- MLPL (MMSS Location Associated Priority List)
- MSPL (MMSS System Priority List)
- OPLMN (Operator Controlled PLMN)
- PLMN (Public Land Mobile Network)
- HPLMN (Home PLMN)
- EHPLMN (Equivalent Home PLMN)

Advantageously, the releases are linked to template masters defined by a mobile network operator, based on at least one of the following criteria:
- billing system;
- plan management server;
- roaming template management server.

The invention also concerns an OTA platform comprising files to be downloaded over the air to secure elements cooperating with terminals, these files comprising roaming information allowing the secure elements to connect to networks different from their Home Public Land Mobile Networks, this OTA platform being arranged to check if a more recent release of at least one file for which the owner of a secure element has contracted a subscription is available, when the secure element is polling the OTA platform, and if the check is positive, sending only this new release to the secure element.

Other particularities and advantages of the invention will appear when reading an advantageous embodiment of the invention, which is given as an illustration and not a limitation, and referring to the appended drawings, wherein:
- Fig. 1 represents the principle of the invention;
- Fig. 2 represents how a master template is affected to a new subscriber.

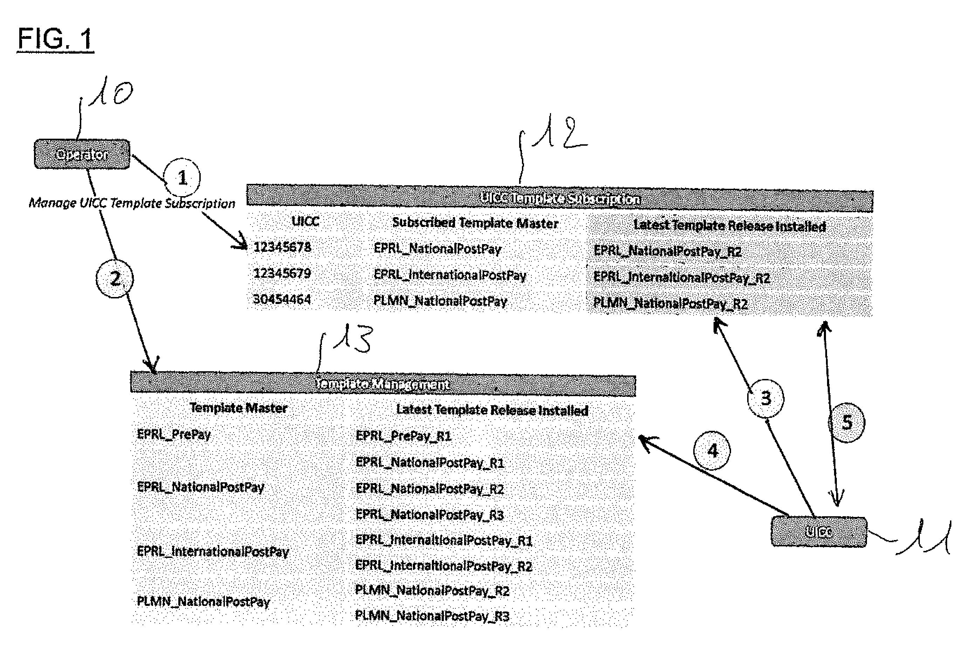

Fig. 1 represents the principle of the invention.

In this figure, an operator 10 manages multiple UICCs (secure elements). Only one UICC 11 is represented. The operator 10 also manages an OTA platform (not represented, the OTA platform comprising at least a microprocessor or processing circuits for communicating with the UICCs and processing data as will be explained below) containing two tables: a UICC template subscription table 12 and a template management table 13.

The template subscription table 12 contains, for each UICC managed by the operator 10, a "Subscribed Template Master" and the "Latest Template Release Installed". The "Subscribed Template Master" corresponds to the subscription for which the owner of the secure element has contracted a subscription. Here, for example:
- the owner of UICC referenced 12345678 has a national postpaid subscription and the file EPRL_NationalPostpay containing the roaming information allowing this secure element to connect to networks different from its HPLMN is a EPRL (Extended Preferred Roaming List),
- the owner of UICC referenced 12345679 has an international postpaid subscription and the file EPRL_InternationalPostpay containing the roaming information allowing this secure element to connect to networks different from its HPLMN is also a EPRL (Extended Preferred Roaming List),
- the owner of UICC referenced 30454464 has also a national postpaid subscription and the file containing the roaming information allowing this secure element to connect to networks different from its HPLMN is a PLMN.

The references of the UICCs are for example their IMSIs, or MDNs, or their ICCIDs sent by these UICCs to the OTA platform during polling.

The OTA platform also knows which latest release corresponding to the subscription of a UICC has been installed in this UICC:
- Template release R2 of the file EPRL_NationalPostpay is the latest release installed in UICC 12345678;
- Template release R2 of the file EPRL_InternationalPostpay is the latest release installed in UICC 12345679;
- Template release R2 of the file PLMN_NationalPostpay is the latest release installed in UICC 30454464.

The template subscription table 12 is generated (step 1) when the operator subscribes or unsubscribes template masters for UICCs. This can be done in subscription creation phase, or later on at any time when there is business need to change the subscription (for example during billing plan change).

Step 2 corresponds to the creation of a new template release for a template master. This step consists in enriching the template management table 13.

For each template master (EPRL_PrePay, EPRL_NationalPostpay, EPRL_InternationalPostPay, PLMN_NationalPostPay in this example), the operator installs in the template management table 13 the different corresponding releases. As can be seen in this table 13, three different releases are for example available for the EPRL_NationalPostPay master template, releases R1, R2 and R3.

At step 3, UICC 11 polls the OTA platform and this platform checks if the UICC has any template subscription.

At step 4, if the UICC 11 has a template subscription, the OTA platform checks if the installed template release in UICC 11 is the latest template release.

For example, if the subscription installed in the UICC 11 (corresponding for example to UICC referenced 12345678) is a national postpaid subscription, its EPRL file should be the third release R3. But as can be seen in table 12, the latest template release installed in this UICC is release 2 and table 13 comprises a new release of this EPRL (release R3). This more recent release R3 should therefore replace release R2.

This is done at step 5: A newer template release for the UICC 11 is downloaded from the OTA platform to UICC 11and stored in this UICC. After a successful download, table 12 is amended to indicate that UICC 12345678 contains EPRL_NationalPostPay_R3.

The master template works as a master which controls template releases. All template releases belong to a corresponding master template. As shown, a master template can have several template releases.

The preceding example is based on master templates but other ways of updating one or more files in UICCs can be easily derived for the man skilled in the art, the important point being that only the new releases of files corresponding to subscriptions for which the owners of secure elements have contracted subscriptions are sent to these secure elements.

For a given secure element, a single file represented by a script is normally necessary to be updated. Otherwise, two or more scripts have to be bundled and transferred to the secure elements, depending on the subscriptions. However, according to the invention, there is no download of the whole scripts available at the level of the OTA platform, based on the profile of the UICC. This allows to only downloading files that are necessary for the UICC to connect to networks different from their Home Public Land Mobile Networks. The files that are downloaded to the UICCs are therefore only related to the real needs of these UICCs.

For example, a UICC for which its subscriber has only subscribed a national postpaid subscription will not receive files related to prepaid subscriptions or related to international subscriptions. This allows to minimize the size of data transmitted to UICCs.

Moreover, the invention presents the advantage that a MNO can update the files of table 13 "on the fly" when he negotiates roaming rates with other MNOs. Each time a UICC connects to the OTA server, it will get, if necessary, updated files corresponding to its subscription.

The method according to the invention allows updating at least one of the following files in a UICC:
- EPRL
- MLPL
- MSPL
- OPLMN
- PLMN
- HPLMN
- EHPLMN

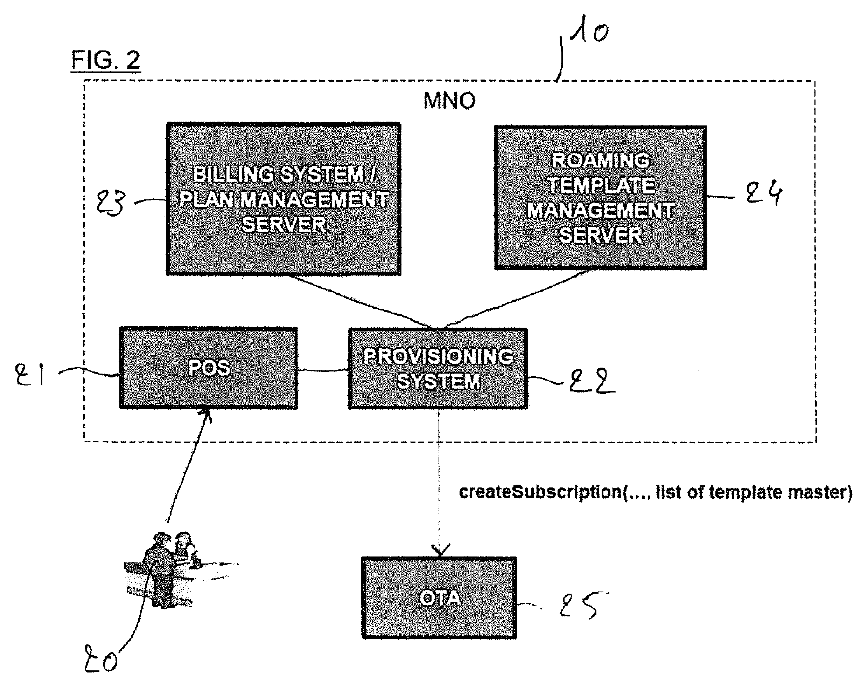

Fig. 2 represents how a master template is affected to a new subscriber.

A subscriber 20 wishing to get a subscription of a MNO 10 goes to a point of sales 21 (POS) of this MNO and chooses a subscription (national, international, prepaid,...). The POS 21 enters the reference of the UICC in the provisioning system 22 of the MNO, this provisioning system being linked to the billing system (an entity responsible for billing) and plan management server 23 (an entity responsible to determine the business logic and business rules according to the subscriber plan) and to a roaming template management server 24. The roaming template management server 24 comprises table 12 of fig.1.Once registered in the provisioning system 22, the UICC reference, the subscribed template master and the release installed in the UICC of the subscriber are stored in a OTA platform 25 of the MNO.

This process also applies when the subscriber 20 decides to modify his subscription, for example if he decides to add a subscription for unlimited calls in Europe: A new template master is added to his profile, in order to be able to update (when polling) also the list of preferred European MNOs. A modification of a subscription can also consist for example in changing a prepaid subscription to a postpaid subscription.

According to the invention, the releases are thus linked to template masters defined by a mobile network operator, based on at least one of the following components:
- billing system;
- plan management server;
- roaming template management server.

As soon as a new template release is defined by a MNO, this new template release is pushed to the OTA platform and, when a UICC is polling this platform, the new release can be downloaded to this UICC.

Thus, the system proposed by the invention manages the UICC template release. It supports adding a template release subscription for a UICC or cancels a template release subscription from a UICC. As soon as a template release subscription is persisted in OTA over HTTP system for a UICC, each time when a new template release is issued, the UICC will be allowed to download this new template release in its next polling HTTP request without any campaign service provisioning until the template release subscription is cancelled.

In order to add a template release subscription for a UICC, a link between UICC and template master has to be established during UICC provisioning phase or later on added by operator's provisioning system. When a UICC polls the OTA server over HTTP, the system will check if any installed template release subscription exist, and if yes, it checks if this UICC already has its latest release. If UICC doesn't have the latest template release yet, this release will be downloaded to the UICC. If the UICC has already the latest template release, the UICC won't download any template release in response to this subscription. One UICC can have more than one template release subscription. Each different release subscriptions should have different template masters.

One of the advantages of the invention will allow operators publish a new template release, without any campaign effort. The new template release can be downloaded to UICCs.

Operator will just need to maintain template releases subscriptions for the UICCs. In current LTE customer business use cases, the template release subscription can carried with the UICC's lifecycle. Most of the time, the template release subscription will be changed only after end user changes a new billing plan contract with his operator. The invention proposes a disruptive approach for the OTA campaign management by just retrieving the latest version of the template master the subscriber is register on.

The invention also avoids high volume repetitive campaign injections:
- It saves heavy operational workload of launching and maintaining those massive periodic campaigns.
- Only the latest release of a template master will be executed and not the full template release stack injected by a campaign. (e.g. EPRL, MLPL, MSPL, OPLMN, PLMN, HPLMN, EHPLMN).
- It optimizes the resource consumption during the http polling session as there is no more need to go campaign by campaign to verify if the subscriber is eligible or not.
- It provides horizontal scalability and removes the current limitation in terms of 'number of campaign' supported by the system, which is reducing the capacity to a number of supported subscribers.
- the list of files to update on the secure element is determined by business rules or business logic (e.g. depending of the plan associated to the subscription) which could be - or not - coupled with one or several technical criteria (e.g. depending of the electric profile characteristics).

## Claims

1. Method for downloading files from an OTA platform over-the-air to secure elements cooperating with terminals, said files comprising roaming information allowing said secure elements to connect to networks different from their Home Public Land Mobile Networks, said method consisting in, for each secure element:
- Polling said OTA platform by said secure element;
- Checking by said OTA platform if a new release of at least one file for which the owner of said secure element has contracted a subscription is available;
- If said check is positive, sending by said OTA platform only said new release to said secure element and storing said new release in said secure element.

2. Method according to claim 1, wherein said at least one file is one of the following files:
- EPRL (Extended Preferred Roaming List)
- MLPL (MMSS Location Associated Priority List)
- MSPL (MMSS System Priority List)
- OPLMN (Operator Controlled PLMN)
- PLMN (Public Land Mobile Network)
- HPLMN (Home PLMN)
- EHPLMN (Equivalent Home PLMN)

3. Method according to claims 1 or 2, wherein said releases are linked to template masters defined by a mobile network operator, based on at least one of the following criteria:
- billing system;
- plan management server;
- roaming template management server.

4. OTA platform comprising files to be downloaded over the air to secure elements cooperating with terminals, said files comprising roaming information allowing said secure elements to connect to networks different from their Home Public Land Mobile Networks, said OTA platform being arranged to check if a more recent release of at least one file for which the owner of said secure element has contracted a subscription is available, when said secure element is polling said OTA platform, and if said check is positive, sending only said new release to said secure element.
